# DEMANDE DE BREVET EUROPEEN

(11) **EP 1 821 007 A1**
(43) Date de publication de la demande: **22.08.2007**
(21) Numéro de dépôt: 07101647.1
(22) Date de dépôt: 02.02.2007
(51) Int. Cl.: F16J 15/00, F16C 33/78

(54) **Dispositif d'étanchéité pour carter sous pression et carter dote d'un tel dispositif d'étanchéité**

(30) Priorité: 15.02.2006 FR 0601339
(71) Demandeur: HUTCHINSON, 75008 Paris (FR)
(72) Inventeur: Lor, Jean, 49520 Le Bourg d'Ire (FR); Crapart, René, 49500 Sainte Gemmes d'Andigne (FR)
(74) Mandataire: Cabinet Plasseraud

(57) **Abrégé**

Dispositif d'étanchéité comprenant un palier (6) à roulements monté sur un carter (1) sous pression et supportant un arbre tournant (3), et deux lèvres d'étanchéité annulaires (19, 25) montées à l'intérieur d'une cage annulaire (7) appartenant au palier. Les deux lèvres d'étanchéité délimitent entre elles une chambre collectrice de liquide (24) qui communique avec un canal d'évacuation de liquide (34) par une ouverture (33) ménagée dans la cage annulaire.

## Description

La présente invention est relative aux dispositifs d'étanchéité pour carters sous pression et aux carters dotés de tels dispositifs d'étanchéité.

Plus particulièrement, l'invention concerne dispositif d'étanchéité comprenant :
- un palier adapté pour être monté sur un carter délimitant un espace intérieur rempli de liquide sous pression afin de supporter un arbre tournant,
- des première et deuxième lèvres d'étanchéité annulaires destinées à être solidarisées avec le carter et à être en contact rotatif glissant avec l'arbre tournant, les première et deuxième lèvres d'étanchéité délimitant entre elles une chambre collectrice de liquide dotée d'un canal d'évacuation de liquide,
- et un ajutage adapté pour faire communiquer ladite chambre collectrice avec l'espace intérieur du carter.

Le document EP-A-1 006 299 décrit un dispositif d'étanchéité de ce type, qui comprend un palier lisse à très faible jeu. Ce dispositif d'étanchéité donne entière satisfaction, mais il est toutefois apparu souhaitable de perfectionner encore les dispositifs de ce type, notamment pour en faciliter le montage.

A cet effet, selon l'invention, un dispositif d'étanchéité du genre en question est caractérisé en ce que ledit palier comprend d'une part, une cage annulaire adaptée pour être fixée sur le carter et d'autre part, des roulements portés par la cage annulaire et adaptés pour rouler contre l'arbre tournant, et en ce que ladite cage annulaire porte les première et deuxième lèvres d'étanchéité, qui s'étendent radialement vers l'intérieur à partir de la cage annulaire, une ouverture étant ménagée dans ladite cage annulaire en communication avec le canal d'évacuation.

Grâce à ces dispositions, le palier et les deux lèvres d'étanchéité forment un sous-ensemble pré assemblé, ce qui simplifie considérablement le montage sur le carter.

De plus, on évite ainsi les phénomènes d'échauffement qui peuvent survenir avec un pallier lisse. Enfin, on maîtrise mieux la perte de charge dans l'écoulement de liquide entre l'amont et l'aval du pallier, ce qui permet de mieux maîtriser le débit de fluide et la pression dans la chambre collectrice.

Dans divers modes de réalisation du dispositif selon l'invention, on peut éventuellement avoir recours en outre à l'une et/ou à l'autre des dispositions suivantes :
- la première lèvre d'étanchéité est portée par une collerette solidaire de la cage annulaire, l'ajutage étant ménagé dans ladite collerette ;
- ladite collerette comporte une armature annulaire rigide à section en L, avec une partie cylindrique emmanchée à force dans la cage annulaire et une partie radiale qui porte la première lèvre d'étanchéité ;
- l'armature annulaire de la collerette est revêtue d'une couche d'élastomère ;
- la première lèvre d'étanchéité est en PTFE ;
- la deuxième lèvre d'étanchéité est en élastomère et est surmoulée sur une ossature annulaire rigide qui est emmanchée à force dans la cage annulaire ;
- une couche d'élastomère formée d'une seule pièce avec la deuxième lèvre d'étanchéité, est interposée entre l'ossature de la deuxième lèvre d'étanchéité et la cage annulaire ;
- la couche d'élastomère forme au moins une butée en contact avec la collerette de la première lèvre d'étanchéité, ladite butée délimitant un passage qui fait communiquer l'ajutage avec l'ouverture de la cage annulaire ;
- un joint en élastomère est comprimé radialement entre la cage annulaire et une partie cylindrique appartenant à l'ossature de la deuxième lèvre d'étanchéité, ledit joint en élastomère étant également comprimé axialement entre un collet rabattu appartenant à la cage annulaire et une bride appartenant à l'ossature ;
- la deuxième lèvre d'étanchéité est en caoutchouc ;
- la première lèvre d'étanchéité est adaptée pour résister à une première pression d'au moins 5 bar et la deuxième lèvre d'étanchéité est adaptée pour résister à une deuxième pression inférieure à la première pression, le palier, l'ajutage et le passage d'évacuation étant calibrés pour permettre une fuite de liquide à un débit tel qu'il règne dans la chambre collectrice une pression inférieure à la deuxième valeur limite ;
- les première et deuxième lèvres d'étanchéité sont adaptées pour permettre des vitesses de rotation de l'arbre tournant supérieures à 5000 t/mn.

Par ailleurs, l'invention a également pour objet un carter rempli de liquide sous pression, doté d'un arbre tournant pénétrant dans ledit carter et d'un dispositif d'étanchéité tel que défini ci-dessus, la cage annulaire étant fixée sur le carter, les roulements étant en contact avec l'arbre tournant, les première et deuxième lèvres d'étanchéité annulaires étant en contact rotatif glissant avec l'arbre tournant, l'ajutage faisant communiquer la chambre collectrice avec l'espace intérieur du carter.

D'autres caractéristiques et avantages de l'invention apparaîtront au cours de la description suivante d'une de ses formes de réalisation, donnée à titre d'exemple non limitatif, en regard du dessin joint.

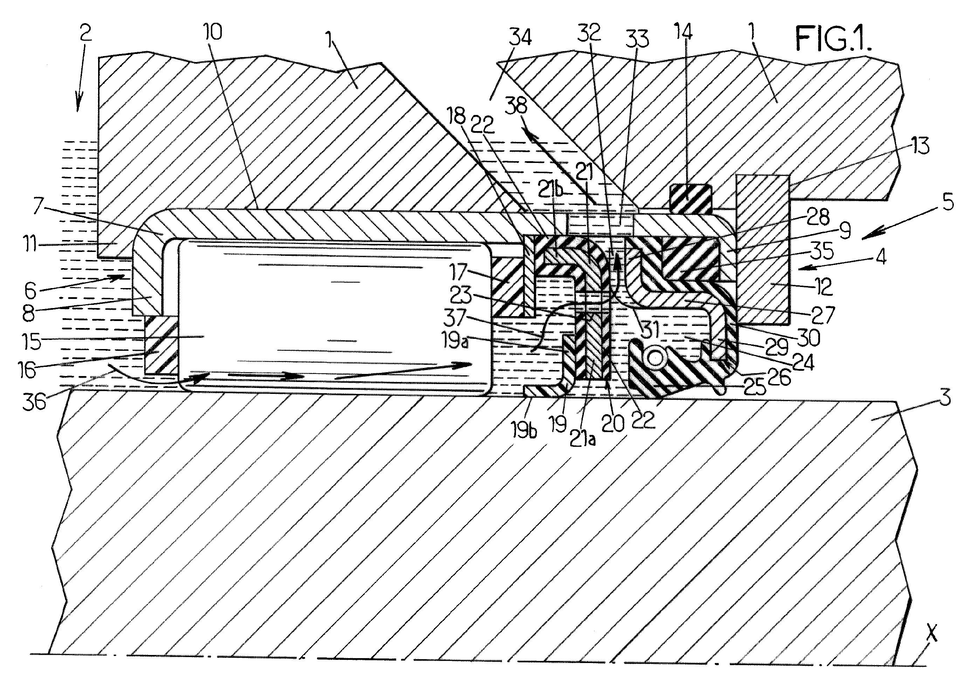

Sur le dessin, la figure 1 est une vue partielle en coupe axiale d'un dispositif d'étanchéité selon une forme de réalisation de l'invention.
La figure 1 représente une partie d'un carter 1 qui délimite un espace intérieur 2 remplis de liquide sous pression, par exemple de l'huile. Le carter 1 peut par exemple appartenir à une boîte de vitesses, notamment une boîte de vitesses automatique.

La paroi du carter 1 est traversée par un arbre 3 qui pénètre dans l'espace intérieur 2 et qui est monté rotatif autour d'un axe de rotation X. De plus, un dispositif d'étanchéité 4 est interposé entre le carter 1 et l'arbre 3 pour éviter les fuites de liquide de l'espace intérieur 2 vers l'extérieur 5 qui peut par exemple être à l'air ambiant. Le dispositif d'étanchéité 4 est adapté pour résister à une pression de liquide supérieure à 5 bars, et généralement comprise entre 10 et 20 bars, dans l'espace intérieur 2, tout en permettant une rotation de l'arbre 3 à une vitesse supérieure à 5000 t/mn, couramment 8000 t/mn.

Le dispositif d'étanchéité 4 comporte un palier 6 à roulements qui comprend une cage annulaire extérieure 7, de forme générale cylindrique, centrée sur l'axe X, qui peut présenter à ses extrémités axiales, deux collets intérieurs rabattus 8, 9.

La cage annulaire 7 peut par exemple être emboîtée à force dans l'ouverture 10 du carter qui est traversée par l'arbre 3. Le collet intérieur 8 de la bague annulaire est orienté vers l'espace intérieur 2 du carter et bute contre un épaulement 11 du carter, tandis que le collet 9 bute vers l'extérieur contre une pièce rapportée 12 telle qu'un anneau élastique logé dans un évidemment annulaire 13 ménagé intérieurement dans l'ouverture 10 du carter. Un joint d'étanchéité 14 en élastomère peut en outre être interposé radialement entre la bague annulaire 7 et le carter au voisinage de l'anneau élastique 12.

Le palier 6 comporte en outre des roulements 15, en l'occurrence des aiguilles cylindriques dans l'exemple représenté sur les dessins, qui sont régulièrement réparties autour de l'arbre 3 de façon à rouler, d'une part, sur la surface extérieure de l'arbre 3, et d'autre part, sur la surface intérieure de la cage annulaire 7.

Dans l'exemple considéré ici, les aiguilles cylindriques 15 sont maintenues axialement entre deux bagues de guidage 16, 17, réalisées par exemple en PTFE et solidarisées chacune à la cage annulaire 7. Plus particulièrement, dans l'exemple considéré ici, la bague de guidage 16, disposée vers l'espace intérieur 2 du carter, peut par exemple être collée ou fixée autrement à l'extrémité libre du collet intérieur 8 de la cage annulaire, tandis que la bague de guidage 17 opposée est collée ou solidarisée autrement sur une face d'une rondelle rigide 18 elle-même emmanchée à force de la cage annulaire 7.

Par ailleurs, le dispositif d'étanchéité 4 comporte en outre une première lèvre d'étanchéité 19, de révolution autour de l'axe X, qui est disposée en contact rotatif glissant contre la surface extérieure de l'arbre 3, à l'opposé de l'espace intérieur 2 par rapport aux aiguilles cylindriques 15. Cette première lèvre d'étanchéité est adaptée pour résister à une première pression correspondant à la pression régnant dans l'espace intérieur 2, aux vitesses de rotation susmentionnées de l'arbre 3. La première lèvre d'étanchéité 19 peut par exemple présenter une forme annulaire à section en L, avec une première branche 19a disposée sensiblement dans un plan radial par rapport à l'axe X et une deuxième branche 19b s'étendant axialement vers les aiguilles cylindriques 15 et disposée en contact glissant contre la surface extérieure de l'arbre 3.

La première lèvre d'étanchéité 19 peut être portée par une collerette 20 solidaire de la cage annulaire 7. Plus particulièrement, la collerette 20 peut comporter une armature annulaire 21 à section en L, de révolution autour de l'axe X, avec une première branche 21a disposée dans un plan radial et une deuxième branche 21b s'étendant axialement vers les aiguilles cylindriques 15. La deuxième branche 21 est emmanchée à force dans la cage annulaire 7, en contact axial avec la rondelle 18 susmentionnée. L'armature 21 peut être recouverte d'une couche d'élastomère, par exemple du caoutchouc, qui est interposée entre, d'une part, l'armature 21, et d'autre part, la cage annulaire 7 et la rondelle 18. La première branche 19a de la première lèvre d'étanchéité peut par exemple être adhérisée sur la couche d'élastomère au niveau de la face de la première branche 21a de l'armature qui est orientée vers les aiguilles cylindriques 15.

La collerette 20 est par ailleurs percée d'un ajutage calibré 23 qui débouche dans une chambre collectrice 24 délimitée axialement entre la première lèvre d'étanchéité 19 et une deuxième lèvre d'étanchéité 25, adaptée pour résister à une deuxième pression (par exemple de l'ordre de 1 bar) inférieure à la première pression.

La deuxième lèvre d'étanchéité 25 est une lèvre en élastomère, par exemple en caoutchouc, qui présente une forme de révolution centrée sur l'axe X et qui est en contact rotatif glissant contre la surface extérieure de l'arbre 3. Cette deuxième lèvre d'étanchéité 25 est disposée axialement vers l'extérieur par rapport à la première lèvre d'étanchéité 19, et elle peut être surmoulée sur une ossature métallique rigide 26 sensiblement en forme de S qui est emmanchée à force à l'intérieur de la cage annulaire 7.

L'ossature 26 est une pièce annulaire, de révolution autour de l'axe X, qui peut présenter par exemple une section sensiblement en forme de S, avec un tronçon axial 27 prolongé :
- du côté de la première lèvre d'étanchéité 19, par une bride 28 s'étendant radialement vers l'extérieur,
- et du côté opposé à la première lèvre d'étanchéité 19, par une bride 29 s'étendant radialement vers l'intérieur.

Une couche d'élastomère 30, formée d'une seule pièce avec la deuxième lèvre d'étanchéité 25, peut par exemple recouvrir l'ossature 27 au moins à l'opposé de la chambre collectrice 24, cette couche d'élastomère 30 étant interposée notamment entre la bride extérieure 28 et la surface intérieure de la cage annulaire 7. Cette couche d'élastomère 30 forme en outre au moins une butée 31 qui est en contact contre la collerette 20 en délimitant avec celle-ci un passage 32 qui fait communiquer la chambre collectrice 24 avec une ouverture 33 ménagée dans la cage annulaire 7, laquelle ouverture 33 débouche dans un canal d'évacuation de liquide 34. Ce canal d'évacuation de liquide 34 communique lui-même avec un réservoir de liquide dans lequel est pompé le liquide contenu dans l'espace intérieur 2 délimité par le carter 1.

Un joint annulaire en élastomère, par exemple en caoutchouc, est en outre interposé radialement entre la couche d'élastomère 30 et la surface intérieure de la cage annulaire 7 au niveau du tronçon axial 27 de l'ossature 26. Ce joint en élastomère est en butée axiale contre la couche d'élastomère 30 au niveau de la collerette extérieure 28 et il est comprimé axialement par le collet 9. On notera que tous les éléments contenus dans la cage annulaire 7 constituent un sous-ensemble pré assemblé qui peut être aisément monté dans l'ouverture 10 du carter 1. Lors de la fabrication de ce sous-ensemble pré assemblé, on réalise d'abord la cage annulaire 7 avec uniquement son collet 8, le collet 9 n'étant pas encore rabattu, puis on insère successivement à l'intérieur de la cage annulaire 7 :
- les aiguilles 15,
- la bague de guidage 17 et sa rondelle 18, les bagues de guidage 16, 17 tenant ensuite les aiguilles cylindriques 15 en position,
- la première lèvre d'étanchéité 19 et sa collerette 20,
- la deuxième lèvre d'étanchéité 25 et son ossature 26,
- le joint 35.

Une fois le joint 35 inséré dans la cage annulaire 7, on ferme le collet 9 par sertissage ou similaire, ce qui comprime le joint 25 qui, sous l'effet de la compression, assure une étanchéité parfaite vers l'extérieur.

Le dispositif qui vient d'être décrit fonctionne comme suit : sous l'effet de la pression de liquide dans l'espace intérieur 2, une fuite permanente de liquide s'établit au niveau du palier 6 (flèche 36), puis au niveau de l'ajutage calibré 23, du passage 32, de l'ouverture 33 et du canal d'évacuation 34 (flèches 37, 38). Le débit de cette fuite est calibré pour créer une perte de charge telle que la pression dans la chambre collectrice 24 soit inférieure à la deuxième pression susmentionnée (environ 1 bar dans l'exemple décrit ici).

## Revendications

1. Dispositif d'étanchéité comprenant :
- un palier (6) adapté pour être monté sur un carter (1) délimitant un espace intérieur (2) rempli de liquide sous pression afin de supporter un arbre tournant (3),
- des première et deuxième lèvres d'étanchéité (19, 25) annulaires destinées à être solidarisées avec le carter (1) et à être en contact rotatif glissant avec l'arbre tournant (3), les première et deuxième lèvres d'étanchéité (19, 25) délimitant entre elles une chambre collectrice (24) de liquide dotée d'un canal d'évacuation (34) de liquide,
- et un ajutage (23) adapté pour faire communiquer ladite chambre collectrice (24) avec l'espace intérieur (2) du carter,
**caractérisé en ce que** ledit palier (6) comprend d'une part, une cage annulaire (7) adaptée pour être fixée sur le carter (1) et d'autre part, des roulements (15) portés par la cage annulaire (7) et adaptés pour rouler contre l'arbre tournant (3),
et **en ce que** ladite cage annulaire (7) porte les première et deuxième lèvres d'étanchéité (19, 25), qui s'étendent radialement vers l'intérieur à partir de la cage annulaire, une ouverture (33) étant ménagée dans ladite cage annulaire en communication avec le canal d'évacuation (34).

2. Dispositif d'étanchéité selon la revendication 1, dans lequel la première lèvre d'étanchéité (19) est portée par une collerette (20) solidaire de la cage annulaire (7), l'ajutage (23) étant ménagé dans ladite collerette (20).

3. Dispositif d'étanchéité selon la revendication 2, dans lequel ladite collerette (20) comporte une armature annulaire (21) rigide à section en L, avec une partie cylindrique (21bà emmanchée à force dans la cage annulaire (7) et une partie radiale (21a) qui porte la première lèvre d'étanchéité (19).

4. Dispositif d'étanchéité selon la revendication 2, dans lequel l'armature annulaire (20) de la collerette est revêtue d'une couche d'élastomère (22).

5. Dispositif d'étanchéité selon l'une quelconque des revendications précédentes, dans lequel la première lèvre d'étanchéité (19) est en PTFE.

6. Dispositif d'étanchéité selon l'une quelconque des revendications précédentes, dans lequel la deuxième lèvre d'étanchéité (25) est en élastomère et est surmoulée sur une ossature annulaire rigide (26) qui est emmanchée à force dans la cage annulaire (7).

7. Dispositif d'étanchéité selon la revendication 6, dans lequel une couche d'élastomère (30) formée d'une seule pièce avec la deuxième lèvre d'étanchéité (25), est interposée entre l'ossature (26) de la deuxième lèvre d'étanchéité et la cage annulaire (7).

8. Dispositif d'étanchéité selon la revendication 6 ou la revendication 7, dans lequel la couche d'élastomère (30) forme au moins une butée (31) en contact avec la collerette (20) de la première lèvre d'étanchéité, ladite butée (31) délimitant un passage (32) qui fait communiquer l'ajutage (23) avec l'ouverture (33) de la cage annulaire.

9. Dispositif d'étanchéité selon l'une quelconque des revendications 6 à 8, dans lequel un joint en élastomère (35) est comprimé radialement entre la cage annulaire et une partie cylindrique (27) appartenant à l'ossature (26) de la deuxième lèvre d'étanchéité, ledit joint en élastomère (35) étant également comprimé axialement entre un collet rabattu (9) appartenant à la cage annulaire (7) et une bride (28) appartenant à l'ossature (26).

10. Dispositif d'étanchéité selon l'une quelconque des revendications précédentes, dans lequel la deuxième lèvre d'étanchéité (25) est en caoutchouc.

11. Dispositif d'étanchéité selon l'une quelconque des revendications précédentes, dans lequel la première lèvre d'étanchéité (19) est adaptée pour résister à une première pression d'au moins 5 bar et la deuxième lèvre d'étanchéité (25) est adaptée pour résister à une deuxième pression inférieure à la première pression,
et dans lequel le palier (6), l'ajutage (23) et le passage d'évacuation (34) sont calibrés pour permettre une fuite de liquide à un débit tel qu'il règne dans la chambre collectrice (24) une pression inférieure à la deuxième valeur limite.

12. Dispositif d'étanchéité selon l'une quelconque des revendications précédentes, dans lequel les première et deuxième lèvres d'étanchéité (19, 25) sont adaptées pour permettre des vitesses de rotation de l'arbre tournant (3) supérieures à 5000 t/mn.

13. Carter (1) rempli de liquide sous pression, doté d'un arbre tournant (3) pénétrant dans ledit carter et d'un dispositif d'étanchéité (4) selon l'une quelconque des revendications précédentes, la cage annulaire (7) étant fixée sur le carter (1), les roulements (15) étant en contact avec l'arbre tournant (3), les première et deuxième lèvres d'étanchéité (19, 25) annulaires étant en contact rotatif glissant avec l'arbre tournant (3), l'ajutage (23) faisant communiquer la chambre collectrice (24) avec l'espace intérieur du carter.
